# EUROPÄISCHE PATENTSCHRIFT

(11) **EP 2 204 372 B1**
(45) Veröffentlichungstag und Bekanntmachung des Hinweises auf die Patenterteilung: **04.01.2012**
(21) Anmeldenummer: 10156176.9
(22) Anmeldetag: 15.09.2006
(51) Int. Cl.: C07F 9/22, C07B 63/00

(54) **Verfahren zur Herstellung von Thiophosophorsäuretriamiden mit Hilfe unpolarer Amine**
Process for the preparation of thiophosphoric acid triamides with non-polar amines
Procédé pour la préparation de triamides de l'acide thiophosphorique à l'aide d'amines non polaires

(30) Priorität: 08.11.2005 DE 102005053540
(43) Veröffentlichungstag der Anmeldung: 07.07.2010
(62) Teilanmeldung aus: 06793548.6
(73) Patentinhaber: BASF SE, 67056 Ludwigshafen (DE)
(72) Erfinder: Körnig, Wolfgang, 69181 Leimen (DE); Mauß, Michael, 67434 Neustadt (DE); Huttenloch, Oliver, 75228 Ispringen (DE); Deck, Patrick, 68165 Mannheim (DE); Ganz, Holger, 67067 Ludwigshafen (DE); Bock, Michael, 67152 Ruppertsberg (DE)

(56) Entgegenhaltungen:
- EP-A1- 0 119 487
- WO-A-91/01294
- WO-A-98/31693
- WO-A-2005/061416
- GB-A- 1 398 545

## Beschreibung

Die vorliegende Erfindung betrifft ein Verfahren zur Herstellung von Thiophosphorsäuretriamiden.

Der Fachmann hat oft das Problem, während einer chemischen Reaktion freigesetzte Säuren abzufangen oder Säuren aus Reaktionsgemischen abzutrennen. Beispiele für Reaktionen, in denen Säuren im Reaktionsverlauf freigesetzt werden, sind die Silylierung von Alkoholen oder Aminen mit Halogensilanen, die Phosphorylierung von Aminen oder Alkoholen mit Phosphorhalogeniden, die Bildung von Sulfonsäureestern oder -amiden aus Alkoholen oder Aminen und Suifonsäurechlodden oder-anhydriden sowie die Bildung von Acylverbindungen aus Säurehalogeniden oder Anhydriden und Alkoholen oder Aminen.

Üblicherweise ist es notwendig, diese freigesetzten Säuren mit einer Base unter Salzbildung zu binden, um Neben- und Folgereaktionen des Wertprodukts zu unterbinden oder einfach um die Säure aus dem gewünschten Reaktionsprodukt zu entfernen.

Verfahren zur Abtrennung von Säuren aus chemischen Reaktionsgemischen sind in WO 03/062171 und WO 2005/061416 beschrieben. Durch diese Verfahren der Abtrennung von Säuren mit Hilfe von ionischen Flüssigkeiten können typischerweise unpolare Wertprodukte von Säuren in chemischen Reaktionsgemischen getrennt werden. Man nutzt dafür eine Phasenseparation zwischen dem unpolaren Wertprodukt und einer polaren ionischen Flüssigkeit, resultierend aus Säure und zugesetzter Base, aus. Falls das Wertprodukt jedoch einen zu polaren Charakter hat, wird die Phasenseparation zwischen Wertprodukt und ionischer Flüssigkeit gestört bzw. unmöglich gemacht. Polare Wertprodukte sind nach den in WO 03/062171 und WO 2005/061416 beschriebenen Konzepten nicht isolierbar.

WO 91/01294 offenbart ein Verfahren zur Herstellung von tertiären Amin-Schwefeltrioxid-Komplexen durch Umsetzung von Chlorsulfonsäure mit tertiären Aminen und anschließender Zugabe von Ammoniak und Wasser. Das unlösliche Produkt wird durch Filtration isoliert.

WO 98/31693 beschreibt ein Verfahren zur Herstellung von Thiophophorsäuretriamiden, bei dem während der Reaktion gebildetes Ammoniumchlorid in einem großen Überschuss an flüssigem Ammoniak gelöst und so vom Wertprodukt, welches sich in der organischen Phase befindet, abgetrennt wird.

GB 1 398 545 beschreibt ein Trennverfahren zur Isolierung von Bis(dimethylamino)-phosphorsäurechlorid oder Phosphorsäuretris(dimethylamid). Das Nebenprodukt Dimethylammoniumchlorid wird mit Wasser extrahiert und das Wertprodukt anschließend destilliert. Eine Hilfsbase wird nicht verwendet.

Phosphorsäure- und Thiophosphorsäuretriamide und ihre Verwendung als Ureaseinhibitoren sind aus EP 0 119 487 bekannt.

Eine Aufgabe dieser Erfindung bestand darin, ein Verfahren zur Herstellung von Thiophosphorsäuretriamiden zu finden, bei dem eine verfahrenstechnisch einfache flüssig-flüssig-Phasentrennung erfolgen kann.

Die Aufgabe wurde erfindungsgemäß dadurch gelöst, dass bei der Herstellung von Thiophosphorsäuretriamiden eine Hilfsbase eingesetzt wird, die ein unpolares tertiäres Amin ist.

Gegenstand der Erfindung ist somit ein Verfahren zur Herstellung von Thiophosphorsäuretriamiden durch Umsetzung von Thiophosphorylchlorid mit mindestens einem primären oder sekundären Amin in einem inerten Lösungsmittel unter Zuhilfenahme mindestens eines unpolaren tertiären Amins als Hilfsbase, umfassend die Schritte:
a) Reaktion der Hilfsbase mit dem im Verlauf der Umsetzung entstehenden Chlorwasserstoff unter Bildung eines Chloridsalzes;
b) Umsetzung des in Schritt a) gebildeten Chloridsalzes mit Ammoniak, welches den Chlorwasserstoff unter Freisetzung der Hilfsbase übernimmt;
c) Extraktion der in Schritt b) erhaltenen Mischung mit Wasser oder einem wässrigen Medium, wobei sich das gebildete Ammoniumchlorid in der wässrigen Phase löst und die Lösung des Thiophosphorsäuretriamids in dem inerten Lösungsmittel und die Hilfsbase mindestens eine separate nichtwässrige Phase bilden; und
d) Abdestillieren von zumindest einem Teil des inerten Lösungsmittels aus der mindestens einen in Schritt c) erhaltenen nichtwässrigen Phase, wobei zwei nicht mischbare flüssige Phasen gebildet werden.

Für die Umsetzung des Thiophosphorylchlorids wird mindestens ein primäres oder sekundäres Amin eingesetzt.

Vorteilhafterweise sind dies Verbindungen gemäß der allgemeinen Formel (II)

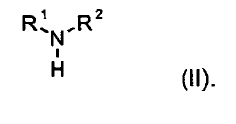

Dabei bedeuten R¹ und R² unabhängig voneinander Wasserstoff, Alkyl, Alkenyl, Cycloalkyl, Aryl oder Hetaryl.

Die Alkylreste weisen vorzugsweise 1 bis 20 C-Atome, besonders bevorzugt 3 bis 5 C-Atome, die Alkenylreste vorzugsweise 2 bis 20 C-Atome, besonders bevorzugt 3 bis 6 C-Atome, die Cycloalkylreste vorzugsweise 3 bis 20 C-Atome, besonders bevorzugt 5 bis 7 C-Atome, und die Arylreste vorzugsweise 6 bis10 C-Atome auf. Hierbei steht Aryl vorteilhafterweise für Phenyl oder Naphthyl.

Hetaryl steht für einen Rest der sich beispielsweise ableitet von Furan, Thiophen, Pyrrol, Imidazol, Pyrazol, Oxazol, Isoxazol, Thiazol, Isothiazol, Oxadiazol, Thiadiazol, Triazol, Chinolin, Isochinolin, Pyridin, Pyrimidin, Pyrazin, Pyridazin oder s-Triazin. Besonders bevorzugte Hetaryl-Reste leiten sich ab von Furan, Thiophen und Imidazol.

In einer vorteilhaften Ausführungsform bilden die beiden Reste der Aminogruppe zusammen eine Alkylen- bzw. Alkenylen-Kette, die zusammen mit dem sie verbindenden Stickstoffatom ein 3 bis 6-gliedriges, vorzugsweise 5-gliedriges, Ringsystem bildet, welches gegebenenfalls noch ein oder mehrere weitere Heteroatome, ausgewählt aus der Gruppe, bestehend aus Sauerstoff, Stickstoff und Schwefel, enthält.

Die Substituenten R¹ und R² können zusätzlich noch einen oder mehrere Reste, wie beispielsweise Halogen, Cyano, C₁- bis C₆-Alkylthio, C₁-bis C₆-Alkoxy, C₆-bis C₁₂-Aryl, C₁-bis C₆-(Di)alkylamino, C₁-bis C₆-Alkoxycarbonyl, Aryloxycarbonyl, Carbamoyl, Hydroxy, Amino, Sulfo oder Nitro, aufweisen. Besonders bevorzugt enthalten die Substituenten R¹ und R² Halogen- oder Aminogruppen.

Vorzugsweise kommen Alkylamine, besonders bevorzugt n-Butylamin und/oder n-Propylamin zum Einsatz.

Die primären oder sekundären Amine können einzeln oder im Gemisch untereinander verwendet werden, beispielsweise ein Gemisch aus zwei oder mehreren Alkylaminen, ein Gemisch aus zwei oder mehreren Arylaminen oder ein Gemisch aus jeweils einem oder mehreren Alkyl- und Arylaminen. Ein vorteilhaftes Gemisch ist n-Butylamin und n-Propylamin mit Anteilen von n-Butylamin von 40 bis 99 Gew.-%. Bevorzugt ist ein Anteil an n-Butylamin von 60 bis 80 Gew.-%, besonders bevorzugt von 72 bis 78 Gew.-%.

Die Amine werden vorzugsweise in einem Molverhältnis von 0,9 bis 1,1 mol pro mol Thiophosphorylchlorid, besonders bevorzugt von 0,95 bis 1,05 mol Amin pro mol Thiophosphorylchlorid, verwendet. In einer vorteilhaften Ausführungsform wird in etwa pro mol Thiophosphorylchlorid 1 mol Amin eingesetzt.

Thiophosphorsäuretriamide werden bekanntermaßen relativ leicht zu den entsprechenden Phosphorsäuretriamiden hydrolysiert. In Anwesenheit von Feuchtigkeit liegen Thiophosphorsäuretriamide und ihre korrespondierenden Phosphorsäuretriamide in der Regel im Gemisch miteinander vor. Der Begriff "Thiophosphorsäuretriamid" bezeichnet daher im Rahmen dieser Erfindung sowohl die reinen Thiophosphorsäuretriamide als auch deren Gemische mit den entsprechenden Phosphorsäuretriamiden.

Die Umsetzung des Thiophosphorylchlorids erfolgt erfindungsgemäß in einem inerten polaren Lösungsmittel.

Als Lösungsmittel können erfindungsgemäß alle bekannten inerten polaren Lösungsmittel zur Anwendung kommen. Verwendbar sind beispielsweise Aceton, Methylethylketon, Isobutylmethylketon, Diethylketon, Diethylether, Di-n-butylether, tert.-Butylmethylether, tert.-Butylethylether, Tetrahydrofuran, Dioxan, Essigester wie Essigsäureethylester, Essigsäuremethylester, Essigsäurepropylester, Essigsäurebutylester oder 2-Ethylhexylacetat, Dimethylformamid, Dimethylsulfoxid, Acetonitril, Diethylphthalat, Dioctyladipat, Chloroform, Dichlormethan, Methylchloroform oder Gemische davon. Vorzugsweise wird Essigsäureethylester eingesetzt.

Die inerten polaren Lösungsmittel können allein oder im Gemisch von zwei oder mehreren davon eingesetzt werden.

Vorzugsweise werden nach dem erfindungsgemäßen Verfahren N-Alkylthiophosphorsäuretriamide, beispielsweise N-n-Butylthiophosphorsäuretriamid oder N-n-Propylthiophosphorsäuretriamid, hergestellt.

Dazu werden Thiophosphorylchlorid und ein primäres Alkylamin, beispielsweise n-Butylamin, in Molverhältnissen von vorzugsweise 0,9 bis 1,1 mol Amin pro mol Thiophosphorylchlorid in einem inerten Lösungsmittel, beispielsweise Essigsäureethylester, umgesetzt. Als Hilfsbase fungiert ein Trialkylamin, beispielsweise Tri-n-butylamin, welches zum Tri-n-butylamin-Hydrochlorid umgesetzt wird. In einem zweiten Reaktionsschritt wird das in der ersten Reaktion gebildete N-Alkylthiophosphoryldichlorid mit Ammoniak zum gewünschten Produkt N-Alkylthiophosphorsäuretriamid bei Temperaturen zwischen vorzugsweise -20°C und 50°C zur Reaktion gebracht. Parallel und unabhängig zu dem zweiten Reaktionsschritt fungiert Ammoniak als Base und übernimmt den Chlorwasserstoff vom Trialkylamin-Hydrochlorid unter Bildung von Ammoniumchlorid.

Ammoniak wird vorzugsweise in einem Molverhältnis von 2 bis 15 mol pro mol Thiophosphorylchlorid, besonders bevorzugt von 2,1 bis 10 und besonders bevorzugt von 2,2 bis 7 mol Ammoniak pro mol Thiophosphorylchlord, verwendet. In einer vorteilhaften Ausführungsform werden in etwa pro mol Thiophosphorylchlorid 4 bis 6 mol Ammoniak eingesetzt.

Durch Extraktion der Reaktionsmischung mit hinreichenden Mengen Wasser in Schritt c) des erfindungsgemäßen Verfahrens entsteht eine wässrige Lösung von Ammoniumchlorid und eine organische Phase umfassend das inerte Lösungsmittel, Trialkylamin und N-Alkylthiophosphorsäuretriamid. Die zur Extraktion eingesetzte Wassermenge liegt in der Regel im Bereich von etwa 10 bis etwa 100 mol Wasser pro mol N-Alkylthiophosphorsäuretriamid, bevorzugt im Bereich von 15 bis 50 mol Wasser pro mol N-Alkylthiophosphorsäuretriamid.

Die Extraktion kann ein- oder mehrstufig erfolgen und sowohl kontinuierlich als auch diskontinuierlich durchgeführt werden. Vorzugsweise wird eine mehrstufige Extraktion durchgeführt, beispielsweise in einer dem Fachmann bekannten Mixer-Settler-Anordnung aus Dispergierstufen und Phasenscheidern oder einer pulsiert gerührten Extraktionskolonne. Die Anzahl der theoretischen Trennstufen sollte 1 bis 10, vorzugsweise 3 bis 5 betragen. Um möglichst wenig Wertprodukt zu verlieren ist es vorteilhaft, die wässrige Phase aus der Extraktion mit dem Lösungsmittel Essigsäureethylester im gleichen Apparat einer Rückextraktion zu unterwerfen. Einen Teil des zur Extraktion verwendeten Wassers kann man vorteilhaft schon vor dem eigentlichen Extraktionsapparat in einem separaten Reaktor oder einem Mischorgan zur Reaktionsmischung geben, um dem Auflösen des Ammoniumchlorids in der wässrigen Phase ausreichend Zeit einzuräumen.

Nach destillativer Entfernung des inerten Lösungsmittels entsteht ein zweiphasiges flüssig-flüssig-Gemisch aus einer Trialkylamin- und einer N-Alkylthiophosphorsäuretriamid-Phase in einem Temperaturfenster zwischen 15°C und 100°C. Die beiden Phasen können leicht voneinander getrennt werden.

Alternativ kann auch das Trialkylamin zusammen mit dem inerten Lösungsmittel fast vollständig verdampft werden, wobei das Wertprodukt N-Alkylthiophosphorsäuretriamid als Rückstand verbleibt. Diese Verdampfung kann man beispielsweise mit einem Dünnschicht-, Mehrphasenwendelrohr-, Kletterfilm- oder Kurzwegverdampfer mit kurzer Verweilzeit direkt nach der Extraktion durchführen, wobei die thermische Belastung des Wertprodukts minimiert wird. Falls eine längere Verweilzeit in Kauf genommen werden kann, lassen sich auch Fallfilm- oder Langrohrverdampfer einsetzen. In einer bevorzugten Ausführungsform wird eine zweistufige Eindampfung in einem Dünnschichtverdampfer mit einer gesamten Verweilzeit in beiden Stufen von weniger als 2 Minuten durchgeführt. Der Druck in der ersten Dünnschichtverdampferstufe beträgt 50 bis150 mbar, bevorzugt 60 bis 90 mbar. Die Temperatur in der ersten Dünnschichtverdampferstufe beträgt 80 bis 150°C, bevorzugt 100 bis 130°C. Der Druck der zweiten Verdampferstufe beträgt 0,1 bis 20 mbar, bevorzugt weniger als 2 mbar, die Temperatur 80 bis 140°C, bevorzugt 90 bis 100°C. Da das Ammoniumchlorid erfindungsgemäß vorher extrahiert wurde, treten bei dieser Verdampfung keinerlei Ausfällungen oder Feststoffbildungen auf, die das Betreiben des Apparates erschweren würden.

Die bei der Verdampfung entstehenden Brüden können kondensiert und anschließend weiter in einer Lösungsmittelkolonne, beispielsweise einer Trennwandkolonne, aufgearbeitet und in den Prozess zurückgeführt werden.

Die nach dem erfindungsgemäßen Verfahren erhältlichen Thiophosphorsäuretriamide weisen vorzugsweise einen niedrigen Restgehalt an Ammoniumchlorid auf. In einer besonders bevorzugten Ausführungsform der Erfindung weisen die nach dem erfindungsgemäßen Verfahren erhältlichen Thiophosphorsäuretriamide einen Gehalt an Ammoniumchlorid von < 500 ppm (w/w), ganz besonders bevorzugt von < 100 ppm (w/w), jeweils bezogen auf das Thiophosphorsäuretriamid, auf.

In einer weiteren bevorzugten Ausführungsform der Erfindung weisen die nach dem erfindungsgemäßen Verfahren erhältlichen Thiophosphorsäuretriamide einen Restgehalt an inertem Lösungsmittel und Hilfsbase von zusammen < 1 Gew.%, besonders bevorzugt von < 0,5 Gew.-%, jeweils bezogen auf das Thiophosphorsäuretriamid, auf.

Thiophosphorsäuretriamide, speziell N-n-Butylthiophosphorsäuretriamid (NBPT) oder N-n-Propylthiophosphorsäuretriamid, sind wirksame Urease-Inhibitoren, die in harnstoffbasierten Düngemittelzusammensetzungen Anwendung finden. Durch solche Urease-Hemmer kann die Effizienz der Harnstoffdüngung verbessert werden, da Verluste durch den Urease-katalysierten Abbau von Harnstoff im Boden verringert werden. (Trenkel, M.E., "Controlled-Release and Stabilized Fertilizers in Agriculture", IFA 1997, ISBN: 2-9506299-0-3).

Eine Phasentrennung tritt bei Gemischen von Flüssigkeiten immer dann auf, wenn sich zwei Komponenten des Gemisches hinreichend in ihrer Polarität unterscheiden, d. h. wenn eine Komponente relativ polar und eine andere Komponente relativ unpolar ist. Ein quantitatives Maß zur Beurteilung, für welche Systeme diese Bedingung erfüllt ist, liefern die jeweiligen Aktivitätskoeffizienten der einen Komponente in unendlicher Verdünnung γ^{∞} in der jeweils anderen. Wie in der Literatur beschrieben (H. R. Null, "Phase Equilibrium in Process Design", Wiley Interscience, 1970), kann eine Phasenseparation nur auftraten, wenn γ^{∞} > 7,39 ist. Somit sollten alle System, bei denen die obige Bedingung erfüllt ist, eine Phasentrennung erlauben und für das beanspruchte Verfahren geeignet sein.

Die folgenden Beispiele sollen die Erfindung weiter erläutern.

### Beispiele

### Beispiel 1: Herstellung von N-n-Butylthiophosphorsäuretriamid (NBPT)

423,5 g (2,5 mol) Thiophosphorylchlorid und 937,5 g Essigester wurden vorgelegt. Zu dieser Mischung wurden bei maximal 30°C eine Mischung aus 193,7 g (2,65 mol) n-Butylamin, 440,2 g (2,375 mol) Tributylamin und 316,6 g Essigester tropfenweise zugegeben. Die Temperatur wurde durch Kühlung bei 30°C gehalten. Es entstand eine klare Lösung. Die Mischung wurde 3 h bei Raumtemperatur nachgerührt.

Danach wurde Ammoniak bei 0°C solange eingeleitet, bis ein Durchschlagen erkennbar war. Die Ammoniakaufnahme betrug 5 bis 6 mol-Äquivalente. Man erhielt eine dünnflüssige Suspension von ausgefallenem Ammoniumchlorid und N-n-Butylthiophosphorsäuretriamid als Wertprodukt, gelöst in Essigester. Die Mischung wurde auf Raumtemperatur erwärmt. Man gab 1406 g Wasser zu und rührte bei Raumtemperatur nach. Dabei ging das Ammoniumchlorid vollständig in Lösung.

Die beiden erhaltenen klaren Phasen wurden getrennt und die organische Phase eingeengt. Nach weitest gehender Entfernung des Essigesters bildete sich bei ca. 60°C eine Oberphase aus Tributylamin und eine Unterphase aus flüssigem NBPT aus. Die Phasen wurden getrennt und man erhielt eine Schmelze von NBPT, welche bei 50°C mit 1200 g 50°C-warmem Wasser versetzt wurde. Unter Rühren wurde das Gemisch abgekühlt, wobei sich das NBPT als Feststoff abschied. Der Feststoff wurde abfiltriert und getrocknet.

Man erhielt 364,8 g Produkt mit einem Gehalt von 76 Gew.-% NBPT (66 % Ausbeute).

### Beispiel 2: Herstellung von N-n-Butylthiophosphorsäuretriamid (NBPT)

In einer Reaktionsmischpumpe wurde ein Strom aus 68 ml/h Thiophosphorylchlorid mit einem Strom von 876 ml/h eines Gemischs aus n-Butylamin und Tri-n-butylamin (0,079 : 1 gew:gew) mit einer Verweilzeit von 13 s unter Kühlung mit Eiswasser zusammengebracht. Der Ablauf der Pumpe wurde für 1 h in einem Reaktor mit vorgelegtem Tributylamin (ca. 10 : 1 vol Feed:vol Bu₃N) bei kontinuierlicher Begasung mit Ammoniak im Überschuss bei 0°C geleitet. Die resultierende milchig-weiße Suspension wurde mit 306 g Wasser versetzt und auf 40°C aufgeheizt. Es bildete sich ein dreiphasiges System aus wässriger Unterphase, mittlerer Wertproduktphase und oberer Tributylaminphase.

## Patentansprüche

1. Verfahren zur Herstellung von Thiophosphorsäuretriamiden durch Umsetzung von Thiophosphorylchlorid mit mindestens einem primären oder sekundären Amin in einem inerten Lösungsmittel unter Zuhilfenahme mindestens eines unpolaren tertiären Amins als Hilfsbase, umfassend die Schritte:
a) Reaktion der Hilfsbase mit dem im Verlauf der Umsetzung entstehenden Chlorwasserstoff unter Bildung eines Chloridsalzes;
b) Umsetzung des in Schritt a) gebildeten Chloridsalzes mit Ammoniak, welches den Chlorwasserstoff unter Freisetzung der Hilfsbase übernimmt;
c) Extraktion der in Schritt b) erhaltenen Mischung mit Wasser oder einem wässrigen Medium, wobei sich das gebildete Ammoniumchlorid in der wässrigen Phase löst und die Lösung des Thiophosphorsäuretriamids in dem inerten Lösungsmittel und die Hilfsbase mindestens eine separate nichtwässrigen Phase bilden; und
d) Abdestillieren von zumindest einem Teil des inerten Lösungsmittels aus der mindestens einen in Schritt c) erhaltenen nichtwässrigen Phase, wobei zwei nicht mischbare flüssige Phasen gebildet werden.

2. Verfahren nach Anspruch 1, **dadurch gekennzeichnet, dass** Thiophosphorylchlorid mit einem Gemisch aus zwei oder mehreren Alkylaminen, einem Gemisch aus zwei oder mehreren Arylaminen oder einem Gemisch aus jeweils einem oder mehreren Alkyl- und Arylaminen umgesetzt wird.

3. Verfahren nach einem der Ansprüche 1 oder 2, **dadurch gekennzeichnet, dass** Thiophosphorylchlorid mit einem Gemisch aus n-Butylamin und n-Propylamin mit Anteilen von n-Butylamin von 40 bis 99 Gew.-% umgesetzt wird.

4. Verfahren nach Anspruch 1, **dadurch gekennzeichnet, dass** die Hilfsbase Triethylamin, Tri-n-propylamin oder Tri-n-butylamin ist.

## Claims

1. A process for the preparation of thiophosphoric triamides by reacting thiophosphoryl chloride with at least one primary or secondary amine in an inert solvent with the aid of at least one apolar tertiary amine as auxiliary base, comprising the following steps:
a) reacting the auxiliary base with the hydrogen chloride generated during the reaction with formation of a chloride salt;
b) reaction of the chloride salt formed in step a) with ammonia, which accepts the hydrogen chloride with liberation of the auxiliary base;
c) extraction of the mixture obtained in step b) with water or an aqueous medium, where the ammonium chloride formed dissolves in the aqueous phase and where the solution of the thiophosphoric triamide in the inert solvent and the auxiliary base form at least one separate nonaqueous phase; and
d) removal by distillation of at least part of the inert solvent from the at least one nonaqueous phase obtained in step c), with formation of two immiscible liquid phases.

2. The process according to Claim 1, wherein thiophosphoryl chloride is reacted with a mixture of two or more alkylamines, a mixture of two or more arylamines or a mixture of in each case one or more alkyl- and arylamines.

3. The process according to any of Claims 1 or 2, wherein thiophosphoryl chloride is reacted with a mixture of n-butylamine and n-propylamine with n-butylamine contents of from 40 to 99% by weight.

4. The process according to Claim 1, wherein the auxiliary base is triethylamine, tri-n-propylamine or tri-n-butylamine.

## Revendications

1. Procédé pour la préparation de triamides de l'acide thiophosphorique par transformation de chlorure de thiophosphoryle avec au moins une amine primaire ou secondaire dans un solvant inerte en utilisant au moins une amine tertiaire non polaire comme base auxiliaire, comprenant les étapes :
a) réaction de la base auxiliaire avec l'acide chlorhydrique se formant au cours de la transformation avec formation d'un sel de chlorure ;
b) transformation du sel de chlorure formé dans l'étape a) avec de l'ammoniac, qui reprend l'acide chlorhydrique avec libération de la base auxiliaire ;
c) extraction du mélange obtenu dans l'étape b) avec de l'eau ou un agent aqueux, où le chlorure d'ammonium formé se dissout dans la phase aqueuse et la solution du triamide de l'acide thiophosphorique dans le solvant inerte et la base auxiliaire forment au moins une phase non aqueuse séparée ; et
d) élimination par distillation d'au moins une partie du solvant inerte de ladite au moins une phase non aqueuse obtenue dans l'étape c), avec formation de deux phases liquides non miscibles.

2. Procédé selon la revendication 1, **caractérisé en ce que** le chlorure de thiophosphoryle est transformé avec un mélange de deux alkylamines ou plus, un mélange de deux arylamines ou plus ou un mélange à chaque fois d'une ou de plusieurs alkylamines et arylamines.

3. Procédé selon l'une quelconque des revendications 1 ou 2, **caractérisé en ce que** le chlorure de thiophosphoryle est transformé avec un mélange de n-butylamine et de n-propylamine présentant des proportions de n-butylamine de 40 à 99% en poids.

4. Procédé selon la revendication 1, **caractérisé en ce que** la base auxiliaire est la triéthylamine, la tri-n-propylamine ou la tri-n-butylamine.
